# FASCICULE DE BREVET EUROPEEN

(11) **EP 2 038 163 B1**
(45) Date de publication et mention de la délivrance du brevet: **24.02.2010**
(21) Numéro de dépôt: 07789013.5
(22) Date de dépôt: 15.06.2007
(51) Int. Cl.: B62D 25/08, B60K 11/04, B60R 19/52

(54) **DISPOSITIF DE PROTECTION CONTRE UN CHOC FRONTAL D'UNE CASSETTE DE REFROIDISSEMENT D'UN VEHICULE**
VORRICHTUNG ZUM SCHUTZ EINER KÜHLKASSETTE EINES FAHRZEUGS VOR EINEM FRONTALAUFPRALL
DEVICE FOR PROTECTING A VEHICLE COOLING CASSETTE AGAINST A HEAD-ON IMPACT

(30) Priorité: 07.07.2006 FR 0652871
(43) Date de publication de la demande: 25.03.2009
(73) Titulaire: Peugeot Citroën Automobiles SA, 78140 Vélizy-Villacoublay (FR)
(72) Inventeur: PERU, Marc, F-92290 Chatenay Malabry (FR)
(86) Numéro de dépôt international: PCT/FR2007/051449
(87) Numéro de publication internationale: WO 2008/003880

(56) Documents cités:
- EP-A1- 1 323 566
- WO-A-2005/105528
- US-A1- 3 860 258

## Description

L'invention concerne un dispositif de protection d'une cassette de refroidissement montée en avant du compartiment moteur d'un véhicule, tel qu'un véhicule automobile, destiné à éviter l'endommagement de la cassette de refroidissement lors d'un choc frontal à basse vitesse.

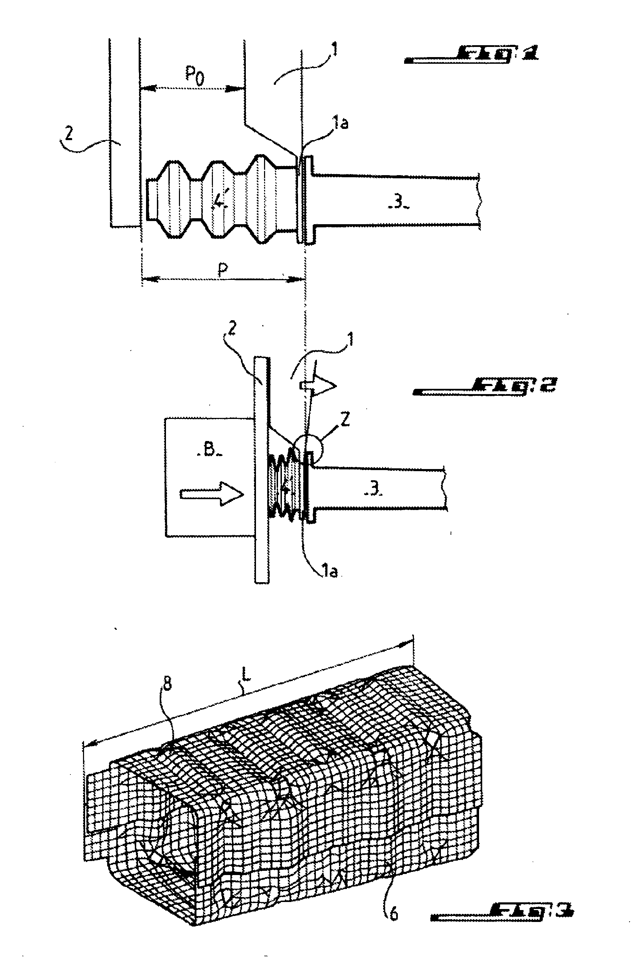

Un tel dispositif connu est schématiquement représenté aux figures 1 et 2 respectivement à l'état initial et après un choc frontal.

Dans ce dispositif, la partie inférieure 1a de la cassette de refroidissement 1 est interposée entre une traverse avant 2 du véhicule et deux brancards avant 3 du véhicule, la cassette s'étendant perpendiculairement aux brancards 3.

De façon à absorber une partie de l'énergie due au choc frontal, le dispositif comprend deux absorbeurs de choc 4', tels que celui représenté sur la figure 3, montés entre la traverse avant 2 et la partie basse la de la cassette de refroidissement 1 sensiblement en prolongement respectivement des deux brancards avant 3.

Ainsi, lors d'un choc, la traverse 2 est enfoncée en direction des brancards 3 et les absorbeurs 4' sont écrasés. De tels absorbeurs 4' permettent de limiter l'endommagement de la cassette de refroidissement 1 dû à l'impact direct de la traverse 2.

Toutefois, si les capacités d'absorption de choc des absorbeurs 4' sont insuffisantes ou si le porte-à-faux avant du véhicule ne permet pas l'implantation d'une longueur d'absorbeur suffisante, la traverse 2 peut heurter la cassette de refroidissement 1 qui est alors endommagée, ou peut se rompre par basculement au niveau de la zone de rupture Z où la partie basse la de la cassette de refroidissement 1 contacte chaque brancard 3, comme représenté sur la figure 2. En outre, le matériel de refroidissement lui-même, embarqué à l'intérieur de la cassette de refroidissement, peut être endommagé par contact direct avec la traverse 2.

Pour respecter les normes de sécurité automobile définissant une vitesse de choc limite au-dessous de laquelle la cassette de refroidissement 1 ne doit pas être endommagée, l'absorbeur d'énergie 4' doit être dimensionné pour avoir une capacité d'absorption relativement importante et par conséquent une longueur, à l'état initial, relativement importante. Un tel dispositif présente alors l'inconvénient d'augmenter la longueur du porte-à-faux P entre la traverse avant 2 et le brancard avant 3 du véhicule, ceci s'avérant contraignant pour la conception des véhicules. Il est à noter que l'endommagement de la cassette de refroidissement pénalise fortement les propriétaires de véhicule puisque cela entraîne une immobilisation certaine de ce dernier.

Par ailleurs, notamment dans les véhicules à fortes motorisations, la taille des cassettes de refroidissement 1 tend à augmenter. Par conséquent, à porte-à-faux P constant, la portion P0 utilisable de chaque absorbeur 4' tend à diminuer. De ce fait, si la taille des cassettes est augmentée, alors la longueur du porte-à-faux P doit être augmentée pour concevoir un véhicule respectant les normes de sécurité automobile.

Le but de l'invention est de remédier à cet inconvénient en proposant un dispositif de protection d'une cassette de refroidissement d'un véhicule qui soit sûr, fiable et qui ne nécessite pas d'augmenter la longueur du porte-à-faux.

A cet effet, l'invention concerne un dispositif de protection contre un choc frontal d'une cassette de refroidissement d'un véhicule dont la partie inférieure est interposée entre une traverse avant et deux brancards avant, et comprenant deux absorbeurs avant de choc montés entre la traverse avant et la partie basse de la cassette de refroidissement sensiblement en prolongement respectivement des deux brancards avant, **caractérisé en ce qu**'il comprend deux absorbeurs arrière de choc disposés entre la partie basse de la cassette de refroidissement et les deux brancards avant sensiblement en prolongement respectivement de ces deux brancards, et en ce que les deux absorbeurs arrière de choc, lors d'un choc frontal, se déforment par écrasement dans la direction longitudinale des brancards avant les deux absorbeurs avant de choc.

Selon une autre caractéristique de l'invention, l'épaisseur de la paroi périphérique de chacun des absorbeurs arrière est inférieure à l'épaisseur de la paroi périphérique de chacun des absorbeurs avant.

Selon une autre caractéristique de l'invention, le rapport entre l'épaisseur de chaque absorbeur arrière et l'épaisseur de chaque absorbeur avant est compris entre 0,7 et 0,9.

Selon une autre caractéristique de l'invention, les absorbeurs avant et arrière, sont chacun en forme de caisson longitudinal dont la paroi périphérique, est ondulée de manière à définir des amorces de pliage, entre deux ondulations successives.

Selon une autre caractéristique de l'invention, le rapport entre la longueur de chaque absorbeur arrière et la longueur de chaque absorbeur avant est compris entre 1,5 et 2, 5.

Selon une autre caractéristique de l'invention, la partie basse de la cassette de refroidissement comprend une platine de fixation fixée transversalement entre les absorbeurs avant et les absorbeurs arrière.

L'invention sera maintenant décrite en détail, en référence aux figures annexées.
- la figure 1 est une vue schématique de dessus partielle d'un dispositif connu de protection d'une cassette de refroidissement, à l'état initial;
- la figure 2 est une vue schématique de dessus du dispositif de la figure 1, après un choc frontal;
- la figure 3 est une représentation en perspective d'un absorbeur d'énergie du dispositif de la figure 1 à l'état initial;
- la figure 4 est une vue schématique de dessus partielle d'un dispositif de protection d'une cassette de refroidissement selon l'invention à l'état initial;
- la figure 5 est une vue schématique de dessus du dispositif de la figure 4 dans un premier temps après le choc frontal;
- la figure 6 est une autre vue schématique de dessus du dispositif de la figure 4 dans un second temps après le choc frontal.

Les différents composants du dispositif d'absorption de choc de l'invention identiques à ceux du dispositif d'absorption de choc de l'art antérieur des figures 1 à 3, portent les mêmes références et ne seront pas à nouveau décrits en détails.

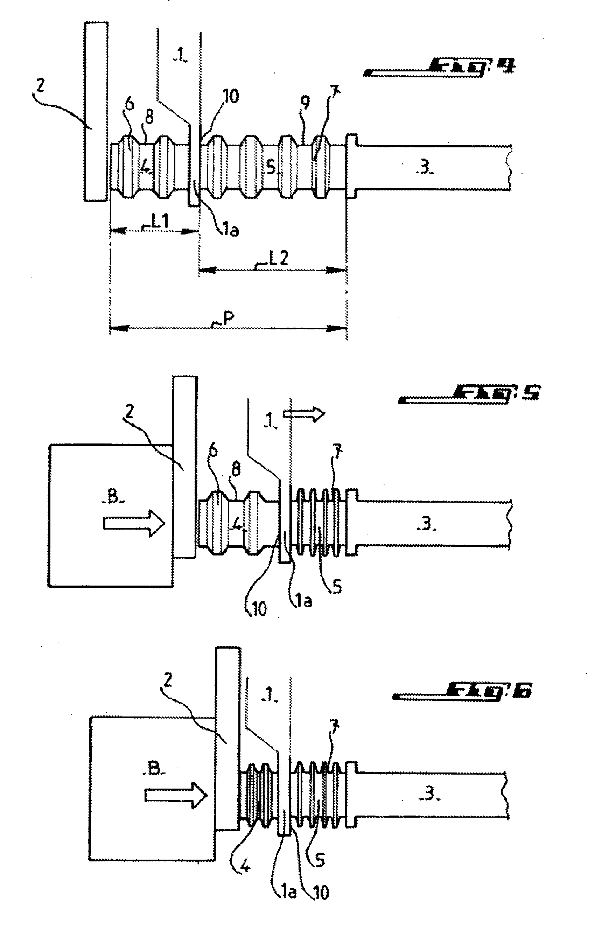

Selon l'invention, le dispositif d'absorption de choc représenté partiellement aux figures 4 à 6 comprend deux absorbeurs arrière de choc 5, sur les figures seul l'absorbeur situé côté gauche est représenté, disposés entre la partie basse la de la cassette de refroidissement 1 et les deux brancards avant 3, sensiblement en prolongement respectivement de ces deux brancards 3. Deux absorbeurs avant de choc 4 sont disposés de façon similaire aux deux absorbeurs avant de choc 4' de l'art antérieur, c'est-à-dire entre la traverse avant 2 et la partie basse la de la cassette de refroidissement 1 en prolongement respectivement des deux absorbeurs arrière de choc 5.

Les absorbeurs avant 4 ont une longueur inférieure à celle des absorbeurs avant 4' de l'art antérieur.

Les deux absorbeurs arrière de choc 5 sont conçus de manière à se déformer par écrasement, lors d'un choc frontal, dans la direction longitudinale des brancards 3, avant déformation des deux absorbeurs avant de choc 4. Ceci est illustré aux figures 4 à 6.

La figure 4 représente deux absorbeurs avant et arrière 4,5 avant l'application d'un choc frontal.

Lors d'un choc frontal, lorsque par exemple l'avant du véhicule heurte un obstacle fixe B, dans un premier temps, les absorbeurs arrière 5 se déforment par écrasement alors que les absorbeurs avant 4 gardent leurs formes initiales, comme représenté à la figure 5. La déformation des absorbeurs arrière 5 provoque le recul de la cassette de refroidissement 1 en direction des brancards avant 3, l'écart entre la cassette de refroidissement 1 et la traverse 2 restant sensiblement similaire à celui de l'état initial.

Puis, une fois les absorbeurs arrière 5 déformés, la traverse avant 2 continue de reculer vers la cassette de refroidissement 1 et les absorbeurs avant 4 se déforment, tels que représentés en figure 6, pour absorber l'énergie de choc restante.

Ainsi, lors d'un choc à basse vitesse, grâce au recul de la cassette de refroidissement 1 dés le début du choc, la cassette de refroidissement 1 n'est pas directement impactée par la traverse 2 et est ainsi protégée efficacement.

En conséquence, pour un porte-à-faux P entre la traverse 2 et les brancards avant 3 similaire à celui du dispositif de l'état de la technique, la cassette de refroidissement 1 reste intacte jusqu'à une vitesse de choc plus élevée.

Les absorbeurs avant 4 et les absorbeurs arrière 5 peuvent être chacun constitués d'une ou de plusieurs feuilles d'acier pliées et assemblées de façon à former un caisson longitudinal ayant une section approximativement carrée.

La paroi périphérique 6,7 de chaque absorbeur est ondulée de manière à définir des amorces de pliage 8,9 entre deux ondulations successives, les amorces de pliage 8,9 étant dirigées transversalement à l'absorbeur de façon à ce que celui-ci puisse se déformer suivant sa longueur.

De manière à optimiser l'écrasement des absorbeurs 4,5, la surface délimitée par la section approximativement carrée de chaque absorbeur est de plus en plus importante de l'extrémité avant vers l'extrémité arrière de l'absorbeur.

Afin que les absorbeurs arrière 5 se compriment avant les absorbeurs avant 4, l'épaisseur de la paroi périphérique 7 de chacun des absorbeurs arrière 5 est inférieure à l'épaisseur de la paroi périphérique 6 de chacun des absorbeurs avant 4.

Avantageusement, le rapport entre l'épaisseur de chaque absorbeur arrière 5 et l'épaisseur de chaque absorbeur avant 4 est compris entre 0,7 et 0,9.

Bien évidemment, d'autres moyens permettant la déformation en premier de l'absorbeur arrière 5 peuvent être envisagés, par exemple, des nervures peuvent être réalisées à l'intérieur de l'absorbeur avant 4 afin de rigidifier ce dernier..., l'absorbeur avant 4 et l'absorbeur arrière 5 possédant alors la même épaisseur.

Par ailleurs, le rapport entre la longueur L2 de chaque absorbeur arrière 5 et la longueur L1 de chaque absorbeur avant 4 est, de façon avantageuse, compris entre 1,5 et 2,5.

Bien sûr, l'invention s'applique à d'autres types d'absorbeurs que ceux décrits, le but de l'invention étant qu'en cas de choc frontal l'absorbeur arrière 5 se déforme en premier.

La partie basse la de la cassette de refroidissement 1 comprend une platine de fixation 10 fixée transversalement entre les absorbeurs avant 4 et les absorbeurs arrière 5.

Ainsi, une extrémité de chaque absorbeur avant 4 est fixée, par exemple par vissage, à la platine de fixation 10; l'extrémité opposée de cet absorbeur avant 4 est en contact avec la traverse 2.

Une extrémité de chaque absorbeur arrière 5 est fixée, par exemple par vissage, à la platine de fixation 10, tandis que son extrémité opposée est vissée sur le brancard avant 3 correspondant, ou sur une platine fixée au brancard avant 3.

Ainsi, la cassette de refroidissement 1 est solidaire uniquement des absorbeurs avant 4 et des absorbeurs arrière 5 afin qu'elle puisse coulisser entre la traverse 2 et les brancards 3.

Le dispositif de l'invention permet de protéger une cassette de refroidissement 1 d'un véhicule de manière sûre et efficace sans augmenter le porte-à-faux P entre les brancards 3 et la traverse 2 du véhicule.

## Revendications

1. Dispositif de protection contre un choc frontal d'une cassette de refroidissement (1) d'un véhicule dont la partie inférieure est interposée entre une traverse avant (2) et deux brancards avant (3), et comprenant deux absorbeurs avant de choc (4) montés entre la traverse avant (2) et la partie basse (1a) de la cassette de refroidissement (1) sensiblement en prolongement respectivement des deux brancards avant (3), **caractérisé en ce qu'**il comprend deux absorbeurs arrière de choc (5) disposés entre la partie basse (1a) de la cassette de refroidissement (1) et les deux brancards avant (3) sensiblement en prolongement respectivement de ces deux brancards avant (3), et **en ce que** les deux absorbeurs arrière de choc (5), lors d'un choc frontal, se déforment par écrasement dans la direction longitudinale des brancards avant (3) avant les deux absorbeurs avant de choc (4).

2. Dispositif selon la revendication (1), **caractérisé en ce que** l'épaisseur de la paroi périphérique (7) de chacun des absorbeurs arrière (5) est inférieure à l'épaisseur de la paroi périphérique (6) de chacun des absorbeurs avant (4).

3. Dispositif selon la revendication (2), **caractérisé en ce que** le rapport entre l'épaisseur de chaque absorbeur arrière (5) et l'épaisseur de chaque absorbeur avant (4) est compris entre 0,7 et 0,9.

4. Dispositif selon l'une des revendications précédentes, **caractérisé en ce que** les absorbeurs avant et arrière (4,5) sont chacun en forme de caisson longitudinal dont la paroi périphérique (6,7) est ondulée de manière à définir des amorces de pliage (8,9) entre deux ondulations successives.

5. Dispositif selon l'une des revendications précédentes, **caractérisé en ce que** le rapport entre la longueur (L2) de chaque absorbeur arrière (5) et la longueur (L1) de chaque absorbeur avant (4) est compris entre 1,5 et 2,5.

6. Dispositif selon l'une des revendications précédentes, **caractérisé en ce que** la partie basse (1a) de la cassette de refroidissement (1) comprend une platine de fixation (10) fixée transversalement entre les absorbeurs avant (4) et les absorbeurs arrière (5).

## Claims

1. Device for protecting against a head-on impact a vehicle cooling cassette (1) in which the lower part is interposed between a front crossmember and two front side rails (3), and comprising two front shock absorbers (4) mounted between the front crossmember (2) and the bottom part (1a) of the cooling cassette (1) essentially in line with the two respective front side rails (3), said device being **characterized in that** it comprises two rear shock absorbers (5) arranged between the bottom part (1a) of the cooling cassette (1) and the two front side rails (3) essentially in line with these two respective front side rails (3), and **in that** the two rear shock absorbers (5) deform, in a head-on impact, by compressing in the longitudinal direction of the front side rails (3) before the front shock absorbers (4).

2. Device according to Claim 1, **characterized in that** the thickness of the peripheral wall (7) of each of the rear absorbers (5) is less than the thickness of the peripheral wall (6) of each of the front absorbers (4).

3. Device according to Claim 2, **characterized in that** the ratio of the thickness of each rear shock absorber (5) to the thickness of each front absorber (4) is between 0.7:1 and 0.9:1.

4. Device according to one of the preceding claims, **characterized in that** the front and rear absorbers (4, 5) are each in the form of a longitudinal box whose peripheral wall (6, 7) is corrugated in such a way as to define bend initiators (8, 9) between two successive corrugations.

5. Device according to one of the preceding claims, **characterized in that** the ratio of the length (L2) of each rear absorber (5) to the length (L1) of each front absorber (4) is between 1.5:1 and 2.5:1.

6. Device according to one of the preceding claims, **characterized in that** the bottom part (1a) of the cooling cassette (1) includes a fixing plate (10) fixed transversally between the front absorbers (4) and the rear absorbers (5).

## Patentansprüche

1. Vorrichtung zum Schutz einer Kühlkassette (1) eines Fahrzeugs vor einem Frontalaufprall, deren unterer Teil zwischen einem vorderen Querträger (2) und zwei vorderen Längsträgern (3) liegt, wobei die Vorrichtung zwei vordere Stoßdämpfer (4) umfasst, die zwischen dem vorderen Querträger (2) und dem unteren Teil (1a) der Kühlkassette (1) im Wesentlichen jeweils in der Verlängerung der beiden vorderen Längsträger (3) montiert sind, **dadurch gekennzeichnet, dass** sie zwei hintere Stoßdämpfer (5) umfasst, die zwischen dem unteren Teil (1a) der Kühlkassette (1) und den beiden vorderen Längsträger (3) im Wesentlichen jeweils in der Verlängerung dieser beiden vorderen Längsträger (3) angeordnet sind, und dass sich die beiden hinteren Stoßdämpfer (5) bei einem Frontalaufprall durch Zusammendrücken in der Längsrichtung der vorderen Längsträger (3) vor den beiden vorderen Stoßdämpfern (4) deformieren.

2. Vorrichtung nach Anspruch 1, **dadurch gekennzeichnet, dass** die Dicke der Umfangswand (7) jedes hinteren Stoßdämpfers (5) geringer ist als die Dicke der Umfangswand (6) jedes vorderen Stoßdämpfers (5).

3. Vorrichtung nach Anspruch 2, **dadurch gekennzeichnet, dass** das Verhältnis der Dicke jedes hinteren Stoßdämpfers (5) zu der Dicke jedes vorderen Stoßdämpfers (4) 0,7 bis 0,9 beträgt.

4. Vorrichtung nach einem der vorhergehenden Ansprüche, **dadurch gekennzeichnet, dass** die vorderen und hinteren Stoßdämpfer (4, 5) jeweils die Form eines Längskastens haben, dessen Umfangswand (6, 7) so gewellt ist, dass Biegeausgangspunkte (8, 9) zwischen zwei aufeinanderfolgenden Wellen definiert sind.

5. Vorrichtung nach einem der vorhergehenden Ansprüche, **dadurch gekennzeichnet, dass** das Verhältnis der Länge (L2) jedes hinteren Stoßdämpfers (5) zu der Länge (L1) jedes vorderen Stoßdämpfers (4) 1,5 bis 2,5 beträgt.

6. Vorrichtung nach einem der vorhergehenden Ansprüche, **dadurch gekennzeichnet, dass** der untere Teil (1a) der Kühlkassette (1) eine Befestigungsplatte (10) umfasst, die quer zwischen dem vorderen Stoßdämpfer (4) und dem hinteren Stoßdämpfer (5) befestigt ist.
